(19) Europäisches Patentamt
European Patent Office
Office européen des brevets

(11) **EP 3 975 082 B1**

(12) **FASCICULE DE BREVET EUROPEEN**

(45) Date de publication et mention
de la délivrance du brevet:
**10.07.2024 Bulletin 2024/28**

(21) Numéro de dépôt: **21197804.4**

(22) Date de dépôt: **20.09.2021**

(51) Classification Internationale des Brevets (IPC):
**G06Q 10/04** *(2023.01)* **G06Q 40/08** *(2012.01)*
**G06Q 50/06** *(2024.01)*

(52) Classification Coopérative des Brevets (CPC):
**G06Q 40/08; G06Q 10/04; G06Q 50/06**

(54) **PROCEDE DE PREDICTION DE RISQUES METEOROLOGIQUES SUR UNE INFRASTRUCTURE DE RESEAU ELECTRIQUE AERIEN**

VERFAHREN ZUR VORHERSAGE METEOROLOGISCHER RISIKEN FÜR EINE INFRASTRUKTUR MIT EINEM FREILEITUNGSNETZ

METHOD FOR PREDICTING METEOROLOGICAL RISKS ON AN OVERHEAD ELECTRICAL NETWORK INFRASTRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2020 FR 2009736**

(43) Date de publication de la demande:
**30.03.2022 Bulletin 2022/13**

(73) Titulaire: **Enedis**
**92079 Paris La Defense Cedex (FR)**

(72) Inventeurs:
• **LAIR, William**
**91300 Massy (FR)**
• **DONDE, Cécile**
**78470 Saint Remy les Chevreuses (FR)**
• **CARER, Philippe**
**92160 Antony (FR)**

(74) Mandataire: **Plasseraud IP**
**66, rue de la Chaussée d'Antin**
**75440 Paris Cedex 09 (FR)**

(56) Documents cités:
• **NATEGHI ROSHANAK ET AL: "Comparison and Validation of Statistical Methods for Predicting Power Outage Durations in the Event of Hurricanes : Comparison and Validation of Statistical Methods", RISK ANALYSIS, vol. 31, no. 12, 13 April 2011 (2011-04-13), US, pages 1897 - 1906, XP055798472, ISSN: 0272-4332, DOI: 10.1111/j.1539-6924.2011.01618.x**
• **HAN SEUNG-RYONG ET AL: "Improving the Predictive Accuracy of Hurricane Power Outage Forecasts Using Generalized Additive Models", RISK ANALYSIS, vol. 29, no. 10, 10 August 2009 (2009-08-10), US, pages 1443 - 1453, XP055798474, ISSN: 0272-4332, DOI: 10.1111/j.1539-6924.2009.01280.x**
• **YUE MENG ET AL: "A Bayesian Approach-Based Outage Prediction in Electric Utility Systems Using Radar Measurement Data", IEEE TRANSACTIONS ON SMART GRID, IEEE, USA, vol. 9, no. 6, 18 May 2017 (2017-05-18), pages 6149 - 6159, XP011693445, ISSN: 1949-3053, [retrieved on 20181018], DOI: 10.1109/TSG.2017.2704288**
• **LIU ET AL: "Spatial generalized linear mixed models of electric power outages due to hurricanes and ice storms", RELIABILITY ENGINEERING AND SYSTEM SAFETY, ELSEVIER APPLIED SCIENCE, GB, vol. 93, no. 6, 14 April 2007 (2007-04-14), pages 897 - 912, XP022504797, ISSN: 0951-8320, DOI: 10.1016/J.RESS.2007.03.038**

## Description

### Domaine technique

L'invention relève du domaine de la gestion de crise des réseaux électriques aériens et en particulier de la prévision des risques météorologiques de tempêtes pouvant affecter des réseaux électriques aériens haute tension.

### Technique antérieure

Pour les opérateurs de distribution d'électricité, la réalimentation des clients en cas d'incidents sur les réseaux électriques aériens est un enjeu majeur, y compris en période de crise climatique, malgré les difficultés inhérentes à de telles situations.

Afin de mieux réagir et d'améliorer la réalimentation des clients en cas d'aléas climatiques tels que des tempêtes, la demanderesse a engagé différents travaux permettant de mieux appréhender les impacts sur le réseau de distribution des phénomènes de tempête. Ces modélisations anticipées ont pour objet de permettre de mieux préparer et pré-mobiliser les ressources pour gérer les incidents lorsque de tels phénomènes sont annoncés et de réduire leurs conséquences sur la continuité de la fourniture d'électricité. Pour ce faire, une prévision des coupures électriques sur le réseau électrique causées par le passage d'un épisode venteux d'ampleur significative est à considérer.

Le problème métier posé, est celui de prévoir, en amont des tempêtes, le nombre de coupures électriques susceptibles d'impacter le réseau électrique. Cela a pour objectif d'anticiper et optimiser la mobilisation des ressources et d'accélérer la reprise de l'alimentation électrique pour les clients coupés. Lors d'un événement de crise, le nombre de clients coupés en simultané peut être très élevé, ce qui nécessite une prise en charge complexe, c'est pourquoi il est crucial de pouvoir l'anticiper.

Pour répondre à ce besoin, qui se pose pour tous les gestionnaires de réseaux, des travaux basés sur de l'apprentissage profond sont connus notamment des documents :

Tervo, Roope & Karjalainen, Joonas & Jung, Alexander (2019) "Short-Term Prédiction of Electricity Outages Caused by Convective Storms". IEEE Transactions on Geoscience and Remote Sensing. PP. 1-9. 10.1109/TGRS.2019.2921809.

D. Cerrai et al., "Predicting Storm Outages Through New Représentations of Weather and Végétation" in IEEE Access, vol. 7, pp. 29639-29654, 2019, doi: 10.1109/ACCESS.2019.2902558.

Dans le document Roshanak Nateghi, Seth D. Guilkema, Steven M. Quiring "Comparison and Validation of Statistical Méthodes for Predicting Power Outage Durations in the Event of Hurricanes" Risk Analysis, Vol. 31, No. 12, 2011, DOI: 10.1111/j.1539-6924.2011.01618.x sont comparés un modèle AFT et un modèle de COX PH (proportional hazard pour risque proportionnel) basé sur un échantillon de coupures provoquées par une tempête dans le but d'évaluer la durée d'une coupure en fonction de covariables.

### Problème technique

Les méthodes de classification par apprentissage profond calculent un score par élément à classer. Dans le cadre de la présente invention qui concerne l'estimation des départs haute tension moyenne tension (HTA) aériens qui risquent d'être coupés, le problème revient à classer les départs haute tension aériens selon deux classes : « coupé » ou « non coupé ». Une difficulté inhérente à ces méthodes est la nécessité de définir un seuil pour effectuer le classement. Ce seuil peut être évalué à partir de différents tests mais son choix reste arbitraire. Le choix d'un score inapproprié rendra l'évaluation du nombre de coupure peu précise. Par ailleurs, les méthodes de classification ne permettent pas d'évaluer des intervalles de confiance du nombre de départs prévus coupés par l'étape de classification. Ce problème est important car sans intervalle de confiance, il n'est pas possible d'apprécier le risque pris en prenant une décision par rapport aux prévisions.

Par ailleurs, sur le terrain, les moyens de prévisions à disposition des équipes d'exploitation et de gestion de crise sont des fichiers indiquant un nombre de coupures indicatif en fonction d'un temps de retour de la tempête c'est à dire l'intervalle de temps moyen séparant 2 réalisations de tempête de même intensité, ces fichiers nécessitant d'être réinterprété par un oeil expert et une bonne connaissance du terrain. A la disposition des métiers, il n'y a donc pas encore de solution quantifiant l'impact des tempêtes en termes de nombre de coupures à l'échelle de tout un territoire. Le modèle de prévision de panne de la présente invention, permet de solutionner ce problème métier avec un niveau de fiabilité et une précision géographique accrus.

**Exposé de l'invention**

Au vu de l'art antérieur, la présente demande propose un procédé de détermination de risques de coupures sur une infrastructure de réseau électrique d'un territoire comprenant un nombre $N_{dep}$ de départs haute tension aérien dits départs HT aériens $d$ en cas de tempête, qui comprend pour une tempête à venir:

a. pour chaque départ HT aérien dudit territoire, au moins un calcul de probabilité $p_d$ que ledit départ soit coupé selon l'équation tirée d'un modèle de Cox comportant comme contrainte la valeur de rafale $r_d^t$ maximale à subir par ledit départ entre le début de la tempête et un instant t :

[Math. 1]

$$p_d^t = 1 - e^{-\lambda_0(r_d^t)e^{\sum_{i=1}^n \beta_i X_i^d}}$$

avec $X^d = \left(X_1^d, \dots, X_n^d\right)$ des covariables d'environnement desdits départs HT aériens et βi les paramètres représentant l'impact desdites covariables sur le risque de défaillance desdits départs HT aériens, lesdites covariables d'environnement comportant des données prévisionnelles de ladite tempête selon un maillage dudit territoire et des données propres à l'implantation desdites lignes HT aériennes et desdits départs;

b. - au moins une étape de calcul d'un nombre moyen de coupures entre le début de la tempête et l'instant t $E\left[N_{coup}^t\right]$ sur le territoire ou une partie du territoire comportant une étape de sélection d'un nombre de départs $N_{dep}$ de la zone géographique considérée selon la formule :

[Math. 2]

$$E\left[N_{coup}^t\right] = \sum_{d=1}^{N_{dep}} p_d^t = \sum_{d=1}^{N_{dep}} \left(1 - e^{-\lambda_0(r_d^t)e^{\sum_{i=1}^n \beta_i X_i^d}}\right)$$

pour laquelle $N_{coup}^t$ est la variable aléatoire représentant le nombre de coupures desdits départs HT aériens entre le début de la tempête et ledit instant t ;

c. au moins un affichage et/ou une sauvegarde des données du nombre moyen de coupures $E\left[N_{coup}^t\right]$ en fonction des départs potentiellement impactés et de la probabilité $p_d^t$ de coupure pour chaque départ ;

le calcul de probabilité $p_d^t$ étant réitéré à chaque instant t pendant la tempête prévue afin d'évaluer l'évolution de $E\left[N_{coup}^t\right]$ pendant la tempête, la mémoriser et/ou l'afficher.

Ce procédé dont l'exécution est peu consommatrice de ressources de calcul donne une bonne approximation des risques de coupure de départs selon les prévisions de tempête sur le territoire malgré la complexité et le volume de données à traiter. Le procédé a la particularité d'utiliser un modèle de Cox non pas comme un modèle de fiabilité dont la contrainte est le temps qui passe mais comme un modèle contrainte résistance dont la contrainte est la rafale maximale prévue pendant la tempête à l'endroit du départ HT aérien. Le modèle de Cox ainsi utilisé permet alors de calculer, pour chaque départ HT aérien, la probabilité d'occurrence d'une coupure à chaque instant t donné de la tempête à venir.

La réitération du calcul permet en outre d'affiner ladite détermination et de mettre des données de coupure à disposition des équipes d'exploitation et de gestion de crise suffisamment tôt pour préparer des interventions dans le but de réaliser la réalimentation des clients au plus vite.

Le procédé peut comporter:

a. au moins un calcul d'un intervalle de confiance *ic* du nombre de départs coupés entre le début de la tempête et un instant t sur le territoire ou une partie du territoire au moyen d'une approximation de la loi de $N_{coup}^t$ par une loi de Poisson de paramètre

[Math. 3]

$$\sum_{d=1}^{N_{dep}} p_d^t$$

b. au moins un calcul des quantiles de cette loi pour obtenir ledit intervalle de confiance *ic*,
c. au moins une mémorisation dudit intervalle de confiance et/ou l'affichage dudit intervalle de confiance ;

ledit calcul dudit intervalle de confiance *ic* étant réitéré pour chaque valeur de t comprise entre 0 et l'instant de fin de la tempête afin d'évaluer l'évolution dudit intervalle de confiance pendant la tempête, l'afficher et/ou le mémoriser.

La réitération permet d'affiner les calculs en fonction de l'évolution des prévisions et le calcul et l'affichage de l'intervalle de confiance permet aux opérateurs d'évaluer la précision des prévisions pour mieux préparer l'affectation des ressources d'intervention.

A partir de la probabilité de coupure $p_d^t$, le procédé peut comporter :

- une ou plusieurs étapes de calcul de nombres d'incidents entre le début de la tempête et un instant t sur la ligne HT aérienne associée à un départ HT aérien pour chaque départ HT aérien *d* au moyen d'une loi de Poisson de paramètre :

[Math. 4]

$$\lambda_d^t = -\log(1 - p_d^t) = \lambda_0(r_d^t)e^{\sum_{i=1}^n \beta_i X_i^d}$$

- une ou plusieurs étapes de calcul de la loi du nombre d'incidents HT aérienne $N_{inc}^t$ sur ledit territoire contenant les $N_{dep}$ départs HT aériens au moyen d'une loi de Poisson de paramètre :

[Math. 5]

$$\sum_{d=1}^{N_{dep}} \lambda_d^t$$

- une ou plusieurs étapes de sauvegarde et/ou d'affichage de la moyenne *E[N_inc]* desdits nombres d'incidents estimés pour une utilisation en tant qu'outil de préparation de moyens d'intervention.

Pour chaque départ HT aérien, les covariables propres à l'implantation peuvent comporter au moins les données suivantes:

a. une zone où se situe le départ HT aérien;
b. le type de boisement observé sur au moins une portion de ladite zone;
c. la longueur de la ligne HT aérienne reliée au départ;
d. la longueur de la ligne HT aérienne soumise à un risque de boisement.

Ces covariables offrent une précision adaptée pour les prévisions sans complexifier les calculs sur un territoire tel que la France.

Les covariables météo peuvent comporter au moins les données suivantes:

a. la saison d'occurrence de la tempête;
b. la température moyenne pendant la tempête issue des prévisions de tempête;
c. l'humidité moyenne pendant la tempête issue des prévisions de tempête;

d. la direction du vent pendant la tempête (Nord, Sud, Est ou Ouest).

Là aussi les covariables choisies correspondent à une précision suffisante sans ajouter trop de données à considérer.

Les données prévisionnelles comportant la direction du vent, cette dernière peut être calculée en prenant la moyenne des directions des vents lorsque les rafales dépassent le quantile à 75% des rafales prévues pendant la journée durant laquelle la tempête est prévue.

Ceci permet de d'obtenir une évaluation plus précise de la direction du vent pendant l'épisode de tempête et d'éviter de prendre en compte des périodes de la journée sans tempête.

Les calculs peuvent être réitérés à chaque modification des données prévisionnelles de tempêtes sur ledit territoire pour affiner la prévision en temps réel.

Selon un second aspect, l'invention prévoit une méthode d'agrégation de modèles qui comprend pour chaque départ HT aérien d'une zone considérée une étape de calcul d'appartenance à l'une des deux classes « coupé », « non coupé », une étape d'ordonnancement des départs et d'affectation à la classe « coupé » aux $E[N_{coup}]$ départs de rang le plus élevé selon ledit ordonnancement et une étape d'affichage et/ou de mémorisation desdits départs appartenant à la classe « coupé ». $E[N_{coup}]$ étant le nombre moyen de départ prévus coupés sur une zone considérée et sur toute la période de la tempête.

De la sorte, en utilisant les résultats du modèle de Cox comme données d'entrée, un calcul de seuil délicat est évité.

Les résultats peuvent être remontés à une maille de postes sources auxquels appartiennent les départs HT aériens, l'algorithme comportant une localisation des postes sources dont au moins un départ HT aérien est classé coupé et un affichage d'une prévision de postes sources à départs HT aériens classés coupés.

Les départs HT aériens étant regroupés selon des postes source, le procédé peut comporter selon une méthode d'agrégation de modèles:

- au moins une étape de calcul du nombre moyen de postes sources avec au moins un départ HT aérien coupé sur une population de $N_{coup}^{PS}$ postes sources d'au moins une partie du territoire:

[Math. 6]

$$E\left[N_{coup}^{PS}\right] = \sum_{j=1}^{N_{PS}} \left(1 - \prod_{i=1}^{N_{dep}^{j}} \left(1 - p_{d_i}\right)\right) N_{dep}^{j}$$

étant le nombre de départs HT aériens pour le poste source j, et, $p_{d_i}$ étant la probabilité de coupure du départ HT aérien $d_i$ pendant la tempête à venir, et,

- au moins une étape de calcul d'appartenance des postes source à l'une des deux classes « au moins un départ HT aérien coupé » et « *aucun départ HT aérien coupé* »produisant un ordonnancement des postes source, l'appartenance à la classe « au moins un départ HT aérien coupé » étant affectées aux $E\left[N_{coup}^{PS}\right]$ postes source de rang le plus élevé selon ledit ordonnancement et ;

- au moins une étape d'affichage et/ou de mémorisation (360) desdits postes sources appartenant à la classe « *au moins un départ HT aérien coupé* ».

Ceci simplifie les calculs sans trop impacter les prévisions puisque les interventions peuvent être regroupées par poste source.

Le procédé peut se poursuivre par la communication de ces données à des équipes locales au niveau des postes sources pour intervenir dès que possible après passage de la tempête avec des équipements de réseau déjà prêts à être installés.

Alternativement, le procédé peut se poursuivre également par une coupure volontaire d'un départ susceptible d'être affecté pour ne pas risquer d'endommager durablement des équipements du réseau.

La méthode d'agrégation de modèles peut avantageusement utiliser un algorithme connu sous le nom de XGBoost dans le langage R.

La méthode peut prendre en compte en tant que variables le ou les nombres d'heures pour lequel les départs HT aériens sont affectés par une ou plusieurs rafales supérieures à une ou plusieurs vitesses données.

La méthode notamment prendre en compte en tant que variables au moins l'une des données:

    a. nombre de coupures passées liées au vent;
    b. la longitude et la latitude du départ HT aérien en remplacement de la région où se situe le départ HT aérien ;
    c. l'altitude ;
    d. la valeur en degrés de la direction du vent.

Afin de réaliser l'apprentissage pour déterminer les paramètres des algorithmes, le procédé peut comprendre :

    a. - une ou plusieurs étapes préalable de collecte de données d'environnement des lignes électriques hautes tension aériennes dites lignes HT aériennes reliées aux dits départs HT aériens sur ledit territoire et l'organisation d'une base de données associant lesdites données d'environnement desdits départs HT aériens sous formes de covariables $X^d = \left( X_1^d, \ldots, X_n^d \right)$ selon un maillage dudit territoire et,

    b. - une ou plusieurs étapes d'apprentissage, à partir d'une base de données regroupant des données de prévisions météo d'une pluralité de tempêtes passées et les pannes réseau associées, de calcul de paramètres βi d'un modèle de Cox dont le taux de défaillance s'exprime de la façon suivante :

[Math. 7]

$$\lambda(r_d^t, X_1, \ldots, X_n) = \lambda_0(r_d^t) e^{\sum_{i=1}^{n} \beta_i X_i^d} ;$$

les paramètres βi représentant l'impact desdites covariables sur le risque de défaillance en considérant ledit modèle de COX comme un modèle contrainte/résistance dont la contrainte $r_d$ est la rafale maximale subie par un départ avant une coupure ou au cours desdites tempêtes passées si le départ n'est pas coupé et pour lequel $\lambda_0(r_d)$ est le taux de défaillance lorsque toutes les covariables sont nulles.

**Brève description des dessins**

D'autres caractéristiques, détails et avantages de l'invention apparaîtront à la lecture de la description détaillée ci-après d'exemples de réalisation non limitatifs, et à l'analyse des dessins annexés, sur lesquels :

La figure 1 montre la courbe de probabilité de survie d'un départ HT aérien en fonction des rafales maximales subies depuis le début de la tempête ;

La figure 2 montre une courbe de comparaison entre prévision du nombre de coupures calculé par le modèle de Cox et réalisation;

La figure 3 montre une courbe de comparaison horaire du nombre de coupures calculé par le modèle de Cox et réalisation;

La figure 4 représente un premier procédé en rapport avec l'invention;

La figure 5A représente une méthode en rapport avec l'invention;

La figure 5B représente une variante de la méthode de la figure 5A,

La figure 6 représente un troisième procédé en rapport avec l'invention.

**Description des modes de réalisation**

Les dessins et la description ci-après contiennent des éléments pouvant non seulement servir à mieux faire comprendre la présente invention, mais aussi contribuer à sa définition, le cas échéant.

Dans le cadre de la présente invention la problématique de quantifier l'impact des tempêtes en termes de nombre de coupures à l'échelle de tout un territoire est décomposée en un problème quantitatif : Combien de départs HT aériens seront coupés et combien d'incidents HT aériens se produiront lors de la prochaine tempête et en un problème de localisation : Quels seront les départs HT aériens coupés lors de la prochaine tempête ?

On définit comme départ HT aérien le départ d'une ligne Haute Tension aérienne qui dans l'application concernée est une ligne moyenne tension (ligne dite HTA) aérienne. On considère qu'un départ HT aérien est coupé lorsque la ligne qui lui est reliée se coupe à un endroit quelconque ce qui est appelé incident. Il y aura donc une coupure de départ HT aérien correspondant à un ou plusieurs incidents ou coupures de la ligne HT aérienne associée. Les départs HT aériens sont regroupés dans des postes sources qui comportent un ou plusieurs départs.

Le nombre de départs HT aériens coupés correspond au nombre de lignes HT aériennes qui subiront au moins un incident. Il est donc important de prévoir ces deux quantités.

Selon un premier aspect, un premier algorithme basé sur un modèle à risque proportionnel de Cox connu de « *Cox Proportional Hazard Regression for Survival Data*», John Fox, novembre 2001 ; réalise une estimation de la distribution du nombre de départs HT aériens coupés.

Pour ce premier algorithme, dans un premier temps, on récupère les données, on les met en forme dans une base de données spécifique et on apprend un modèle de Cox qui modélise la résistance des départs HT aériens aux rafales. Le modèle permet concrètement de calculer, pour chaque départ, la probabilité, à tout moment de la tempête prévue, que le départ soit coupé. A partir de ces probabilités, on peut calculer le nombre moyen de départs coupés sur une zone et une approximation de la distribution du nombre de départs coupés sur une zone.

Comme vu plus haut, le procédé mis en oeuvre peut se poursuivre par la communication des données de prévision de coupure à des équipes locales au niveau des départs les plus susceptibles d'être impactés pour les préparer à intervenir dès que possible après passage de la tempête. De même le procédé permet de prépositionner des moyens d'intervention en fonction des risques en les déplaçant éventuellement à partir de régions ou zones comportant des départs moins susceptibles d'être impactés.

Alternativement, le procédé peut se poursuivre également par une coupure volontaire de certains départs pour ne pas risquer d'endommager durablement des équipements du réseau.

Selon un second aspect, un second algorithme de classification de type XGBoost tel que décrit dans le document Chen T. and Guestrin C., 2016, « XGBoost: A Scalable Tree Boosting System » dans « Proceedings of the 22nd ACM SIGKDD International Conférence on Knowledge Discovery and Data Mining (KDD '16) » Association for Computing Machinery, New York, NY, USA, 785-794. DOI: https://doi.org/10.1145/2939672.2939785 va permettre de réaliser une estimation des départs les plus à risque d'être coupés.

Pour le premier aspect, le modèle de Cox est à la base une classe de modèles de survie en statistiques qui permet de corréler le temps de survie à des covariables. Les modèles de survie étudient le temps écoulé avant qu'un événement ne survienne. Historiquement, le modèle de Cox a été appliqué en médecine. Au cours des années, l'utilisation du modèle s'est étendue à d'autres situations, en particulier dans le milieu industriel où les modèles de survie sont utilisés pour prévoir la durée avant une défaillance. Classiquement, le modèle de Cox exprime le taux de panne, noté Λ en fonction du temps t et des covariables X1, ..., Xn.

[Math. 8]

$$\lambda(t, X_1, \ldots, X_n) = \lambda_0(t) e^{\sum_{i=1}^{n} \beta_i X_i}$$

$\lambda_0(t)$ est appelé risque de base. Il correspond au risque instantané de défaillance lorsque toutes les covariables sont nulles. La modèle de Cox a la particularité de ne pas avoir besoin de paramétrer cette fonction de risque. On dit que c'est un modèle à risque proportionnel car les risques sont évalués proportionnellement à une référence.

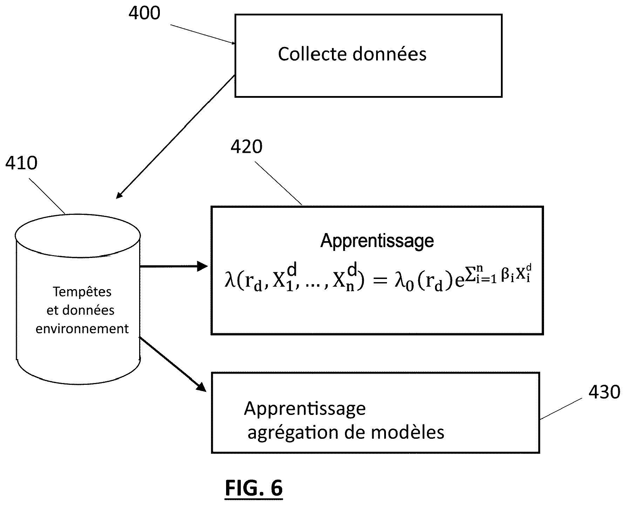

Dans le cadre de la présente invention, un point important est que le temps a été remplacé par le maximum des rafales subies pour chaque départ HT aérien modélisé avant un instant t. Cela revient à modéliser la résistance des départs HT aériens aux rafales subies avant l'instant t. Dans l'étape d'apprentissage, cela revient à considérer le maximum des rafales subies par les départs HT aériens avant une coupure (cas non censuré en terme fiabiliste) ou, lorsqu'il n'y a pas de coupure (cas censuré à droite en terme fiabiliste), le maximum des rafales subies par ces départs HT aériens. Cette étape 420 est schématisée en figure 6 et prend en compte des données météo tempêtes passées collectées 400 et organisées une base de données 410 regroupant dans l'exemple soixante-six tempêtes subies sur le territoire français entre janvier 2014 et décembre 2019 ainsi que des données de description du réseau HT moyenne tension aérien sur ce territoire.

Les données utilisées pour définir les covariables dans la base de données comprennent avantageusement pour les données météo des données telles que :

-   les données des rafales, vitesse, direction ;
-   la saison d'occurrence de la tempête ;

- la température moyenne pendant la tempête issue des prévisions de tempête;
- l'humidité moyenne pendant la tempête issue des prévisions de tempête;
- la direction du vent pendant la tempête (Nord, Sud, Est ou Ouest).

Pour la direction du vent, les données sont dans l'exemple de simulation réalisé issue des prévisions ARPEGE de Météo-France : ce paramètre est calculé en prenant la moyenne des directions (en degré) des vents lorsque les rafales dépassent le quantile à 75% des rafales prévues par Météo-France pendant la journée durant laquelle la tempête se produit. Cela revient à ne prendre en compte que les rafales importantes dans le calcul de la direction du vent.

Les données propres à l'implantation des départs utilisées lors de l'apprentissage comportent dans le modèle réalisé:

- la région où se situe le départ HT aérien ;
- le type de boisement observé sur le département;
- la longueur de la ligne HT reliée au départ ;
- la longueur de la ligne HT soumise à un risque de boisement.

Ces covariables $X_i$ peuvent être numériques, par exemple : longueur aérien, taux de boisement..., ou catégorielles, par exemple : région, type de boisement.... Le taux de défaillance s'exprime de la façon suivante :

[Math. 9]

$$\lambda\left(r_d^t, X_1^d, \ldots, X_n^d\right) = \lambda_0\left(r_d^t\right)e^{\sum_{i=1}^n \beta_i X_i^d}$$

La référence pour une variable catégorielle est l'une des possibilités et la référence pour une variable continue est soit 0 ou sa moyenne. Dans notre cadre, une librairie dénommée « *survival* » du langage de programmation R utilisée pour l'apprentissage considère pour chaque covariable, la moyenne comme étant la référence.

Les paramètres βi sont issus d'un calcul. Ils représentent les paramètres du modèle de Cox à estimer. Ils sont estimés par la méthode classique du Maximum de Vraisemblance. Ces paramètres βi qui représentent l'impact des covariables sur le risque de défaillance, s'interprètent de la façon suivante :

[Math. 10]

$$\beta_i > 0$$

$X_i$ augmente le risque de défaillance ;

[Math. 11]

$$\beta_i = 0$$

$X_i$ n'impacte pas le risque de défaillance ;

[Math. 12]

$$\beta_i < 0$$

$X_i$ réduit le risque de défaillance.

Les covariables $X_i$ sont alors associées à chaque départ dans une base de données départ/covariables.

Pour chaque départ, les données de tempêtes passées comportent une série temporelle de prévision de rafale sur la durée de la tempête à venir. Pour l'organisme météorologique Météo France utilisé pour l'étude, la série temporelle est par exemple une série de prévisions horaires sur un maillage du territoire français sur une centaine d'heures. La série est réactualisée toutes les six heures. La variable t prend dans ce cas les valeurs discrètes 0 heure, 1 heure, ... jusqu'à la fin de la prévision de tempête. En outre, pour une tempête, les données sont distribuées selon un maillage de l'ordre de 10km. Par exemple la France est découpée en une grille régulière dont les carrés mesurent 10km de côté. Pour chaque départ HT aérien, un point est pris de la façon suivante : on construit le plus petit rectangle qui encadre l'ensemble des postes HT/BT reliés au départ. Le « point météo » retenu pour extraire les données de vent, température et humidité est choisi de la façon suivante :

Si au moins un « point météo » est dans le rectangle, on sélectionne celui qui renvoie la plus grande valeur de rafale ;

Si aucun point météo ne se trouve dans le rectangle, on sélectionne celui qui est le plus proche du centre du rectangle.

A chaque nouvelle prévision, pour affiner la prévision, les calculs sont réitérés avec les données réévaluées sur la durée de la tempête prévue accessibles, durée croissante jusqu'à ce que la prévision englobe la durée totale de la tempête à venir.

Ceci permet d'affiner les données en temps réel avant l'arrivée effective de la tempête.

Un premier aspect déjà évoqué ci-dessus consiste à remplacer dans le modèle la variable aléatoire classique « le temps écoulé avant qu'une coupure du départ ne survienne » par la variable aléatoire R « la rafale maximale à laquelle le départ HT aérien résiste ».

Pour ce calcul, dans l'exemple de réalisation, sont utilisées les prévisions de rafales pour chaque maille avec un pas horaire dans l'exemple.

Le modèle de Cox est vu comme un modèle contrainte résistance dont la contrainte est la rafale maximale prévue pendant la tempête à l'endroit du départ HT aérien. Un départ survit à une tempête si la rafale maximale prévue pour ce départ, notée r, n'a pas été suffisante pour le couper, autrement dit la rafale maximale R à laquelle ce départ se coupera est supérieure à r. La probabilité de cet événement s'apparente à la fiabilité et se note :

[Math. 13]

$$P(R > r)$$

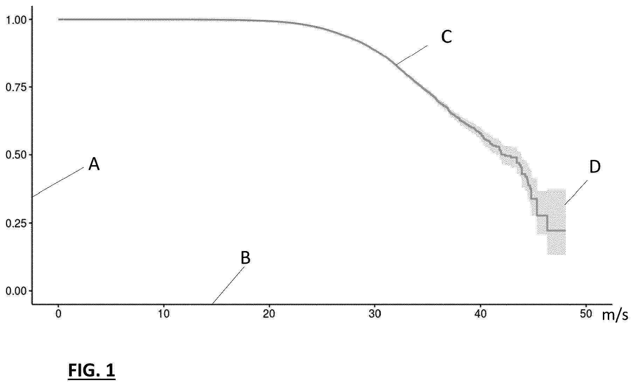

Comme représenté en figure 1, illustrant la courbe C de la probabilité de survie A des départs du territoire en fonction du maximum des rafales B subies entre le début de la tempête et un instant t, avec un intervalle de confiance D, une tempête ayant des rafales plus puissantes a plus de chance de couper les départs. Pour $r_A$ la rafale maximale prévue pour une tempête TA et pour $r_B$ la rafale maximale prévue pour une tempête TB tels que $r_A > r_B$ nous avons ainsi :

[Math. 14]

$$P(R > r_B) > P(R > r_A)$$

La phase d'apprentissage permet d'évaluer les covariables à prendre en compte et les paramètres $\beta i$ à prendre en compte.

La détermination des paramètres et des covariables pertinents a été, dans l'exemple, réalisé à partir d'une base de données regroupant les prévisions météo de Météo France pour 66 tempêtes entre janvier 2014 et décembre 2019 avec une description du réseau. L'apprentissage effectué a permis d'obtenir une estimation de paramètres $\beta i$ appropriés en fonction des covariables retenues comme influant sur la prévision dans ce contexte qui comporte un découpage du territoire en régions en accord avec le découpage par directions régionales de l'opérateur du réseau. D'autres découpages et donc des paramètres et/ou covariables adaptés peuvent être utilisés ou nécessaires pour des territoires différents et/ou des réseaux organisés différemment.

Ainsi, la forme du modèle de Cox retenue dans la présente invention n'est pas classique. En effet, comme vu plus haut, à l'origine le modèle de Cox a été construit comme un modèle de fiabilité dont la contrainte est le temps qui passe. Dans notre cas, le temps a été remplacé par le maximum des rafales subies avant un instant t pendant la durée de la tempête prévue. Le modèle de Cox ainsi utilisé permet alors de calculer, pour chaque départ HT aérien, la probabilité d'occurrence d'une coupure à chaque instant t donné de la tempête à venir.

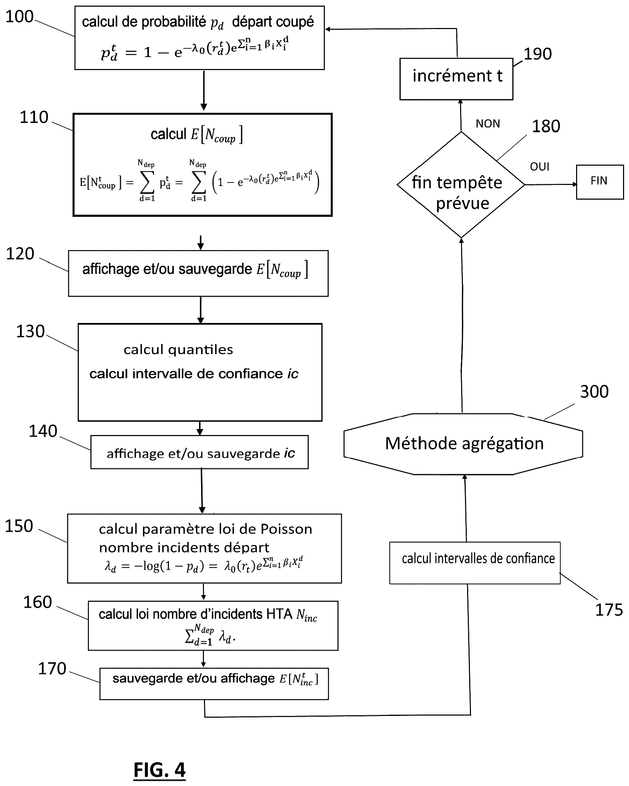

Un exemple de calcul est donné en figure 4.

Pour un départ d, soit $r_d^t$ la rafale maximale prévue entre le début d'une tempête à venir et un instant t, et

[Math. 15]

$$X^d = \left(X_1^d, \ldots, X_n^d\right)$$

les covariables associées.

A l'étape 100, la probabilité notée $p_d^t$ que le départ soit coupé lors de cette tempête entre le début de la tempête et l'instant t, se calcule de la manière suivante :

[Math. 16]

$$p_d^t = 1 - e^{-\lambda_0\left(r_d^t\right)e^{\sum_{i=1}^n \beta_i x_i^d}}$$

Pour l'estimation des paramètres, $r_t$ correspond à la rafale maximale entre le début de l'événement et l'occurrence de la coupure du départ d.

La probabilité $p_d$, correspondant à la probabilité que le départ d soit coupé pendant la tempête, est affichée sur une carte pour les opérateurs utilisant le système de l'invention mais n'a pas vocation à être utilisée telle quelle. On se sert de cette probabilité dans la formule destinée à calculer le nombre de coupures et qui sert à estimer les moyens humains et matériels à mettre en place avant la tempête. Pour ce faire la probabilité $p_d$ est mémorisée au moins temporairement dans le système de calcul associé au procédé.

De l'équation précédente, on peut déduire simplement le nombre moyen de coupures dans la zone géographique ou territoire concerné. Dans l'exemple de réalisation en France ou sur une Direction Régionale ou dans un département. Soit $N_{dep}$ le nombre de départs HT aériens de la zone géographique considérée, soit $N_{coup}^t$ la variable aléatoire représentant le nombre de coupures affectant lesdits départs HT aériens, le nombre moyen de coupures entre le début de la tempête à venir et l'instant t sur cet ensemble est calculé à l'étape 110 de la façon suivante :

[Math. 17]

$$E\left[N_{coup}^t\right] = \sum_{d=1}^{N_{dep}} p_d^t = \sum_{d=1}^{N_{dep}} \left(1 - e^{-\lambda_0\left(r_d^t\right)e^{\sum_{i=1}^n \beta_i x_i^d}}\right)$$

Le calcul explicite de la loi du nombre de coupure $N_{coup}^t$ entre le début de la tempête et l'instant t est possible mais nécessite un travail important en implémentation et un temps de calcul long. En considérant que la coupure du départ d est le résultat d'une expérience de Bernoulli de paramètre $p_d^t$ notée $B(p_d^t)$, la loi de $N_{coup}^t$ parmi une population de $N_{dep}$ départs peut être obtenue en calculant le produit de convolution des $N_{dep}$ lois de Bernoulli :

[Math. 18]

$$N_{coup}^t \sim B(p_1^t) * \cdots * B\left(p_{N_{dep}}^t\right)$$

Toutefois, pour ne pas avoir recours à ce calcul coûteux, nous utilisons l'inégalité de Le Cam (Le Cam L., 1960, An Approximation Theorem for the Poisson Binomial Distribution, Pacific Journal of Mathematics, vol. 10, numéro 4, 1960 p. 1181-1197 qui permet d'approximer la loi de $N_{coup}^t$ par une loi de Poisson de paramètre :

[Math. 19]

$$\sum_{d=1}^{N_{dep}} p_d^t$$

Cette approximation est possible car :

- Sachant les conditions météo, les coupures des départs HT aériens sont indépendantes entre elles ;
- Le nombre important de départs (de l'ordre de 15000 dans le cadre de la simulation effectuée) permet de considérer que nous sommes dans un cadre asymptotique ;
- Les probabilités de coupure sont globalement petites, sauf pour les départs soumis à de très fortes rafales.

Un calcul simple des quantiles de cette loi permet d'obtenir un intervalle de confiance de l'estimation du nombre moyen de départs coupés dans une zone géographique 130.

En prenant par exemple les quantiles de 0.005 et 0.995, l'intervalle de confiance correspond à 99% du support de la loi de $N_{coup}^t$. On considère que la moyenne $E\left[N_{coup}^t\right]$ est l'estimation du nombre de coupures calculé dans le procédé. Ceci permet de réaliser l'affichage et/ou la sauvegarde des données du nombre moyen de coupures $E\left[N_{coup}^t\right]$ des départs potentiellement impactés entre le début de la tempête et l'instant t et de la probabilité $p_d^t$ de coupure pour chaque départ. Le calcul de probabilité $p_d^t$ peut-être réitéré pour chaque valeur t comprise entre 0 et l'instant de fin de la tempête afin d'évaluer l'évolution de $E\left[N_{coup}^t\right]$ pendant la tempête, la mémoriser et/ou l'afficher 120.

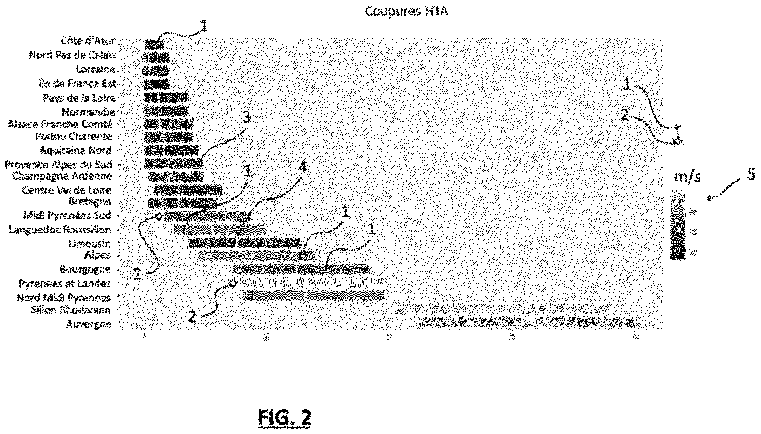

Les intervalles de confiance et les estimations du nombre de coupure peuvent être affichés dans un tableau et dans un graphique comme en figure 2 pour aider à l'évaluation de la situation et de la pertinence de la prévision.

Ces données permettent de quantifier les moyens à mettre en oeuvre au plan général en fonction du nombre de départs coupés estimés.

Ensuite, à partir de la probabilité de coupure $p_d^t$ est réalisé un calcul du nombre d'incidents HT aériens entre le début de la tempête prévue et l'instant t. En effet, sachant les covariables telles que rafales, température, humidité, taux de boisement etc.. , les incidents successifs d'un départ HT aérien peuvent être considérés indépendants. Ainsi le nombre d'incidents HT d'un départ d entre le début de la tempête et l'instant t suit une loi de Poisson de paramètre dont le paramètre $\lambda_d^t$ s'obtient de la manière suivante à l'étape 150:

[Math. 20]

$$\lambda_d^t = -\log(1 - p_d^t) = \lambda_0(r_d^t)e^{\sum_{i=1}^{n}\beta_i x_i^d}$$

A l'étape 160, le nombre d'incidents HT aériens entre le début de la tempête et l'instant t $N_{inc}^t$ sur une zone géographique contenant $N_{dep}$ départs HT aériens suit donc une loi de poisson de paramètre

[Math. 21]

$$\sum_{d=1}^{N_{dep}} \lambda_d^t$$

Le modèle de Cox permet ainsi d'estimer, pour chaque instant t pendant la tempête à venir, le nombre moyen de coupures $E\left[N_{coup}^{t}\right]$ ainsi que le nombre moyen d'incidents $E\left[N_{inc}^{t}\right]$, étape 170, avec intervalles de confiance 130, 175 pour une prochaine tempête prévue par un organisme de prévision météorologique tel que Météo France dans l'étude menée ce qui résout le premier problème soulevé. Dans la suite, $N_{coup}$, respectivement $N_{inc}$, correspond au nombre de coupures, respectivement incidents, prévu sur une zone donnée pendant toute la tempête.

Il est par ailleurs souhaitable de déterminer quels départs HT aériens seront coupés. Il s'agit dans ce cas d'un problème de classification. En effet, chaque départ peut se trouver dans une classe « coupé » ou une classe « non coupé ». Pour ce faire, selon un mode de réalisation est utilisée une méthode d'agrégation de modèles 300 (en anglais Gradient Boosting) et, en particulier, l'algorithme XGBoost dans le langage informatique R a été sélectionné pour cette étape. Cet algorithme est un algorithme d'apprentissage supervisé utilisant des arbres de régression additifs multiples dont le principe et de combiner les résultats d'un ensemble de modèles plus simple et plus faibles afin de fournir une meilleure prévision. L'algorithme va utiliser plusieurs modèles qui seront ensuite combinés pour obtenir un seul résultat.

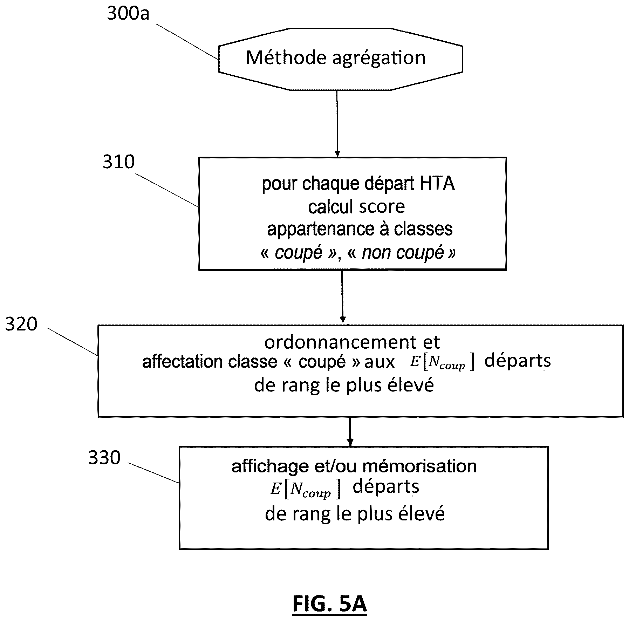

Un problème existant pour les procédés de classification est qu'ils nécessitent le calcul ou la connaissance d'un seuil qui ici n'est pas aisé à évaluer. Dans un mode de réalisation avantageux de l'invention, comme présenté dans la figure 5A, les résultats du modèle de Cox sont utilisés pour se passer du choix du seuil. Pour chaque départ, la méthode d'agrégation de modèles 300a, au préalable calée sur un jeu de données d'apprentissage par une étape d'apprentissage 430 à la figure 6, va calculer dans l'étape 310 de la figure 5A un score, entre 0 et 1, d'appartenance à la classe « coupé » de ce départ et on choisit d'utiliser la donnée $E[N_{coup}]$ pour s'affranchir de ce calcul de seuil.

Pour ce faire, dans un premier mode de réalisation, on ordonne les départs par zone géographique, par exemple département, Direction Régionale ou France entière ; selon le score obtenu par la méthode d'agrégation de modèles et les $E[N_{coup}]$ premiers départs, nombre moyen de départs HT aériens coupés calculé par le modèle de Cox sur la zone considérée, sont considérés comme appartenant à la classe « coupé » et les suivants comme appartenant à la classe « non coupé » à l'étape 320. Ces départs sont alors affichés ou mémorisés à l'étape 330.

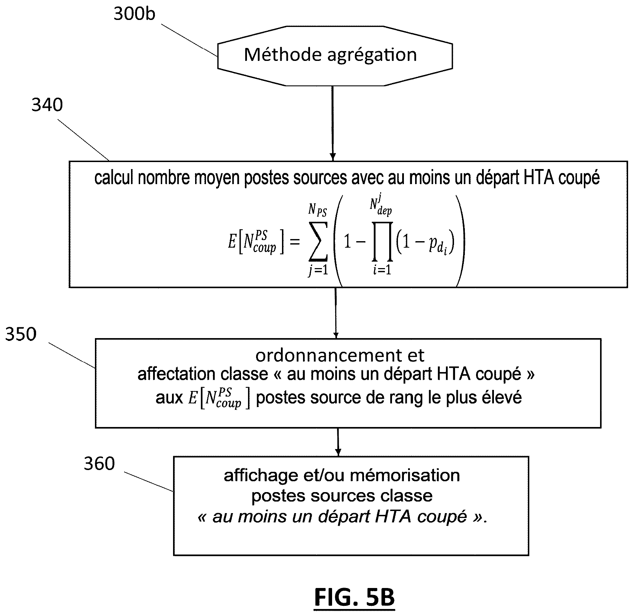

Dans un second mode de réalisation selon la figure 5B, afin d'améliorer la performance de l'algorithme de localisation, les résultats sont remontés à la maille des postes sources regroupant les départs HT aériens. L'algorithme cherche ainsi à localiser les Postes Sources dont au moins un départ HT aérien sera coupé.

les départs HT aériens étant regroupés selon des postes source, le procédé comporte alors selon la variante de la figure 5B :

a. - au moins une étape 340 de calcul du nombre moyen de postes sources avec au moins un départ HT aérien coupé sur une population de $N_{coup}^{PS}$ postes sources d'au moins une partie du territoire:

[Math. 22]

$$E\left[N_{coup}^{PS}\right] = \sum_{j=1}^{N_{PS}} \left(1 - \prod_{i=1}^{N_{dep}^{j}}\left(1 - p_{d_i}\right)\right) N_{dep}^{j}$$

étant le nombre de départ HT aérien pour le poste source j, et,

b. - au moins une étape 350 de calcul d'appartenance des postes source à l'une des deux classes « *au moins un départ HT aérien coupé* » et « *aucun départ HT aérien coupé* » au moyen de la méthode d'agrégation de modèles 300b produisant un ordonnancement des postes source, l'appartenance à la classe « *au moins un départ HT aérien coupé* » étant affectées aux $E\left[N_{coup}^{PS}\right]$ postes source de rang le plus élevé selon ledit ordonnancement. Une fois le calcul effectué, les résultats sont utilisés pour une étape d'affichage et/ou de mémorisation desdits postes sources appartenant à la classe « *au moins un départ HT aérien coupé* » les opérateurs pouvant alors mieux définir les besoins d'intervention.

Pour illustrer, prenons l'exemple de la tempête Elsa survenue entre le 19/12/2019 et le 20/12/2019. Le procédé de l'invention expérimenté sur ce cas pratique de simulation, prévoit en France métropolitaine pour les lignes aériennes HTA, 431 incidents HTA et 367 coupures HTA réparties sur 245 postes sources. En réalité, 402 incidents HTA se sont réellement produits avec 338 coupures HTA réparties sur 219 postes sources. Les prévisions obtenues par le procédé de la présente invention sont donc suffisamment proches de la réalité pour fournir une prévision utilisable.

La figure 2 montre un exemple de l'application du modèle de Cox pour évaluer un nombre d'incidents HT aériens selon la méthode en regard des incidents qui ont réellement eu lieu pour une tempête passée. Sur cette figure se trouve en abscisse le nombre de coupures et en ordonnée la région affectée avec en niveau de gris la vitesse en m/s 5 des rafales Les barres horizontales 3 correspondent à l'intervalle de confiance à 99% selon la méthode. La moyenne 4 de l'estimation prend la forme d'un trait blanc à peu près au centre de ces intervalles. Les points 1 et 2 correspondent aux nombres d'incidents ou de coupures réellement observées. Les points 1 correspondent à un nombre observé dans l'intervalle de confiance les points 2 correspondent à un nombre de coupures hors de l'intervalle de confiance. On remarque que les résultats sont très satisfaisants.

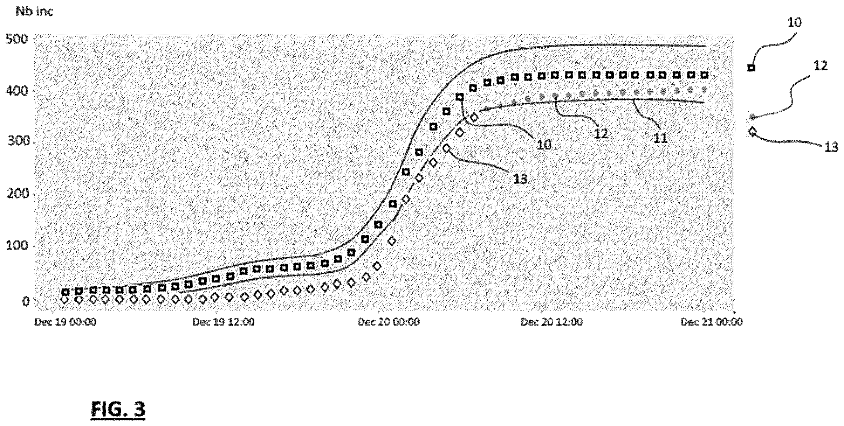

La figure 3 est une courbe qui représente la comparaison horaire entre une prévision (moyenne et intervalle de confiance à 99%) et la réalisation sur une tempête passée. Cette courbe montre l'évolution temporelle de l'impact de la tempête concerné en France métropolitaine. En abscisse se trouve le temps en heures et en ordonnée le nombre d'incidents. Les points 10 sont les coupures issues du modèle représentée par des carrés avec un intervalle de confiance 11. Les points 12 en forme de rond correspondent aux incidents réellement observés dans l'intervalle de confiance 11 et les points 13 en forme de diamant correspondent aux incidents réellement observés hors intervalle de confiance. L'évolution réelle semble décalée d'une ou deux heures mais la tendance a été bien anticipée. Ce décalage peut venir d'un décalage dans la prévision des rafales.

L'utilisation du couplage entre le modèle de Cox et l'algorithme XGBoost pour localiser les coupures à la maille des postes sources sur le modèle de la tempête Elsa en France a permis de constater la performance de la localisation des coupures : 86% des Postes Sources ont été bien classés, 48% des coupures ont été anticipées et 56% des coupures annoncées par l'outil ne se sont pas produites. Les résultats de localisation obtenus par le procédé de l'invention sont ainsi très raisonnables compte tenu de l'aspect difficilement prévisible d'une tempête.

Le procédé peut se poursuivre par une communication des données de classement pour déterminer les lieux et nombre d'interventions à planifier sur les lignes distribuées par les départs et pour quantifier les moyens à mettre en oeuvre au niveau des départs. Le procédé permet aussi de planifier des opérations de mise en place de moyens d'alimentation électriques alternatifs temporaires.

Le procédé peut ainsi se poursuivre par la communication des données par des moyens informatiques ou radio à une ou plusieurs équipes locales pour leur permettre d'intervenir dès que possible après passage de la tempête avec des équipements de réseau déjà prêts à être installés.

Alternativement, le procédé peut dans certains cas se poursuivre également par une coupure volontaire de lignes ou de départs et éventuellement par une dérivation des réseaux pour ne pas risquer d'endommager durablement des équipements du réseau.

L'invention ne se limite pas aux exemples décrits ci-avant, seulement à titre d'exemple, mais englobe toutes les variantes que pourra envisager l'homme de l'art dans le cadre de la protection recherchée.

**Revendications**

1. Procédé de détermination de risques de coupures sur une infrastructure de réseau électrique d'un territoire comprenant un nombre $N_{dep}$ de départs haute tension aérien dits départs HT aériens d en cas de tempête, **caractérisé en ce qu'**il comprend pour une tempête à venir:

   - pour chaque départ HT aérien dudit territoire, au moins un calcul de probabilité

$$p_d^t$$

   (100) que ledit départ soit coupé selon l'équation tirée d'un modèle de Cox comportant comme contrainte la valeur de rafale $r_t$ maximale à subir par ledit départ entre le début de la tempête à venir et un instant t:

[Math. 23]

$$p_d^t = 1 - e^{-\lambda_0(r_d^t)e^{\sum_{i=1}^n \beta_i x_i^d}}$$

   - avec

$$X^d = \left(X_1^d, \ldots, X_n^d\right)$$

des covariables d'environnement desdits départs HT aériens et $\beta i$ les paramètres représentant l'impact desdites covariables sur le risque de défaillance desdits départs HT aériens, lesdites covariables d'environnement comportant des données prévisionnelles de ladite tempête selon un maillage dudit territoire et des données propres à l'implantation desdites lignes HT aériennes et desdits départs HT aériens ;

- au moins une étape de calcul d'un nombre moyen de coupures entre le début de la tempête et l'instant t

$$E\left[N_c^t\right] \quad (110)$$

sur le territoire ou une partie du territoire comportant une étape de sélection d'un nombre de départs $N_d$ de la zone géographique considérée selon la formule :

[Math. 24]

$$E\left[N_c^t\right] = \sum_{d=1}^{N_d} p_d^t = \sum_{d=1}^{N_d} \left(1 - e^{-\lambda_0(r_d^t)e^{\sum_{i=1}^{n} \beta_i x_i^d}}\right)$$

- Pour laquelle

$$N_c^t$$

est la variable aléatoire représentant le nombre de coupures entre le début de la tempête à venir et l'instant t desdits départs HT aériens ;

- au moins un affichage et/ou une sauvegarde (120) des données du nombre moyen de coupures

$$E\left[N_c^t\right]$$

en fonction des départs potentiellement impactés et de la probabilité

$$p_d^t$$

de coupure pour chaque départ ;

et **caractérisé en ce que** le calcul de probabilité

$$p_d^t$$

est réitéré pour chaque valeur de t comprise entre 0 et l'instant de fin de la tempête (190) afin d'évaluer l'évolution de

$$E\left[N_c^t\right]$$

en temps réel pendant la tempête en sorte de la mémoriser et/ou l'afficher.

2. Procédé selon la revendication 1, comportant :

- au moins un calcul d'un intervalle de confiance ic (130) du nombre de départs coupés sur le territoire ou une partie du territoire entre le début de la tempête à venir et l'instant t au moyen d'une approximation de la loi de

$$N_c^t$$

par une loi de Poisson de paramètre :

[Math. 25]

$$\sum_{d=1}^{N_d} p_d^t$$

- au moins un calcul des quantiles de cette loi pour obtenir ledit intervalle de confiance ic,
- au moins une mémorisation dudit intervalle de confiance et/ou l'affichage dudit intervalle de confiance (140) ;

ledit calcul dudit intervalle de confiance *ic* étant réitéré pour chaque valeur de t comprise entre 0 et l'instant de fin de la tempête (190) afin d'évaluer l'évolution dudit intervalle de confiance pendant la tempête, l'afficher et/ou le mémoriser.

3. Procédé selon la revendication 1 ou 2, comportant, à partir de la probabilité de coupure $p_d^t$ ,

- une ou plusieurs étapes de calcul de nombres d'incidents sur la ligne HT aérienne (150) associée à un départ HT aérien entre le début de la tempête et l'instant t pour chaque départ HT aérien d au moyen d'une loi de Poisson de paramètre :

[Math. 26]

$$\lambda_d^t = -\log(1 - p_d^t) = \lambda_0(r_t)e^{\sum_{i=1}^n \beta_i x_i^d}$$

- une ou plusieurs étapes de calcul de la loi du nombre d'incidents HT aériens $N_{ti}^t$ (160) sur ledit territoire contenant les $N_d$ départs HT aériens entre 0 et l'instant t au moyen d'une loi de Poisson de paramètre :

[Math. 27]

$$\sum_{d=1}^{N_d} \lambda_d^t$$

- une ou plusieurs étapes de sauvegarde et/ou d'affichage (170) de la moyenne $E[N_{inc}]$ desdits nombres d'incidents estimés pour une utilisation en tant qu'outil de préparation de moyens d'intervention.

4. Procédé selon l'une quelconque des revendications précédentes, pour lequel, pour chaque départ HT aérien, les covariables propres à l'implantation comportent au moins les données suivantes:

- une zone où se situe le départ HT aérien;
- le type de boisement observé sur au moins une portion de ladite zone;
- la longueur de la ligne HT aérienne reliée au départ;
- la longueur de la ligne HT aérienne soumise à un risque de boisement.

5. Procédé selon l'une quelconque des revendications précédentes, pour lequel, pour chaque départ HT aérien, les covariables météo comportent au moins les données suivantes:

- la saison d'occurrence de la tempête;
- la température moyenne pendant la tempête issue des prévisions de tempête;
- l'humidité moyenne pendant la tempête issue des prévisions de tempête;
- la direction du vent pendant la tempête (Nord, Sud, Est ou Ouest).

6. Procédé selon la revendication 5, pour lequel, les données prévisionnelles comportant la direction du vent, cette dernière est calculée en prenant la moyenne des directions des vents lorsque les rafales dépassent le quantile à 75% des rafales prévues pendant la journée durant laquelle la tempête est prévue.

**7.** Procédé selon l'une quelconque des revendications précédentes, pour lequel les calculs sont réitérés (190) à chaque modification des données prévisionnelles de tempêtes sur ledit territoire.

**8.** Procédé selon l'une quelconque des revendications précédentes, comportant, selon une méthode d'agrégation de modèles (300a), pour chaque départ HT aérien d'une zone considérée une étape (310) de calcul d'appartenance à l'une des deux classes « coupé », « non coupé », une étape (320) d'ordonnancement des départs et d'affectation à la classe « coupé » aux

$$E\left[N_{c_i}\right]$$

départs de rang le plus élevé selon ledit ordonnancement et une étape (330) d'affichage et/ou de mémorisation desdits départs appartenant à la classe « coupé ».

**9.** Procédé selon l'une quelconque des revendications 1 à 7, pour lequel, les départs HT aériens étant regroupés selon des postes source, le procédé comporte selon une méthode d'agrégation de modèles (300b) :

- au moins une étape (340) de calcul du nombre moyen de postes sources avec au moins un départ HT aérien coupé sur une population de

$$N_{c_i}^P$$

postes sources d'au moins une partie du territoire:

[Math. 28]

$$E\left[N_{c_i}^P\right] = \sum_{j=1}^{N_P}\left(1 - \prod_{i=1}^{N_d^j}\left(1 - p_{d_i}\right)\right)N_d^j$$

étant le nombre de départ HT aérien pour le poste source j, et, $p_{d_i}$ étant la probabilité de coupure du départ HT aérien $d_i$ pendant la tempête calculée par le modèle de Cox, et,
- - au moins une étape (350) de calcul d'appartenance des postes source à l'une des deux classes « au moins un départ HT aérien coupé » et « aucun départ HT aérien coupé »produisant un ordonnancement des postes source, l'appartenance à la classe « au moins un départ HT aérien coupé » étant affectées aux

$$E\left[N_{c_i}^P\right]$$

postes source de rang le plus élevé selon ledit ordonnancement et ;
- au moins une étape d'affichage et/ou de mémorisation (360) desdits postes sources appartenant à la classe « au moins un départ HT aérien coupé ».

**10.** Procédé selon la revendication 9 pour lequel les résultats sont remontés à une maille de postes sources auxquels appartiennent les départs HT aériens, l'algorithme comportant une localisation des postes sources dont au moins un départ HT aérien est classé coupé et un affichage d'une prévision de postes sources à départs HT aériens classés coupés.

**11.** Procédé selon la revendication 8, 9 ou 10, pour lequel ladite méthode d'agrégation de modèles utilise un algorithme connu sous le nom de XGBoost dans le langage R.

**12.** Procédé selon l'une quelconque des revendications 8 à 11, pour lequel la méthode prend en compte en tant que variables le ou les nombres d'heures pour lequel les départs HT aériens sont affectés par une ou plusieurs rafales supérieures à une ou plusieurs vitesses données.

13. Procédé selon l'une quelconque des revendications 8 à 12, pour lequel la méthode prend en compte en tant que variables au moins l'une des données:

- nombre de coupures passées liées au vent;
- longitude et la latitude du départ HT aérien en remplacement de la région où se situe le départ HT aérien ;
- altitude ;
- valeur en degrés de la direction du vent.

14. Procédé selon l'une quelconque des revendications précédentes comportant :

- une ou plusieurs étapes préalable de collecte de données (400) d'environnement des lignes électriques hautes tension aériennes reliées aux dits départs HT aériens sur ledit territoire et l'organisation d'une base de données associant lesdites données d'environnement desdits départs HT aériens sous formes de covariables $X^d = \left(X_1^d, ..., X_n^d\right)$ selon un maillage dudit territoire et,
- une ou plusieurs étapes d'apprentissage (420), à partir d'une base de données (410) regroupant des données de prévisions météo d'une pluralité de tempêtes passées et les pannes réseau associées, de calcul de paramètres $\beta i$ d'un modèle de Cox dont le taux de défaillance s'exprime de la façon suivante

[Math. 29]

$$\lambda(r_d, X_1, ..., X_n) = \lambda_0(r_d)e^{\sum_{i=1}^{n} \beta_i x_i^d}$$

les coefficients $\beta$ représentant l'impact desdites covariables sur le risque de défaillance en considérant ledit modèle de COX comme un modèle contrainte/résistance dont la contrainte $r_d$ est la rafale maximale subie par un départ avant une coupure ou au cours desdites tempêtes passées si le départ n'est pas coupé et pour lequel $\lambda_0(r_d)$ est le taux de défaillance lorsque toutes les covariables sont nulles.

**Patentansprüche**

1. Verfahren zur Bestimmung der Risiken von Unterbrechungen in einer Stromnetzinfrastruktur eines Gebiets, das eine Anzahl $N_{dep}$ von Hochspannungs-Luftabzweigungen, sogenannten HV-Luftabzweigungen d im Falle eines Sturms umfasst, **dadurch gekennzeichnet, dass** es für einen drohenden Sturm Folgendes umfasst:

- für jede HV-Luftabzweigung des Gebiets wenigstens eine Berechnung der Wahrscheinlichkeit

$$p_d^t (100),$$

dass die Abzweigung gemäß der Gleichung aus einem Cox-Modell unterbrochen wird, das als Nebenbedingung den maximalen Böenwert $r_t$ enthält, der von der Abzweigung zwischen dem Beginn des drohenden Sturms und einem Zeitpunkt t ausgehalten werden muss:

[Math. 23]

$$p_d^t = 1 - e^{-\lambda_0(r_d^t)e^{\sum_{i=1}^{n} \beta_i x_i^d}}$$

- mit $X^d = (X_1^d, ..., X_n^d)$ der Umgebungsvariablen der HV-Luftabzweigungen und $\beta i$ den Parametern, die den Einfluss der Kovariablen auf das Ausfallrisiko der HV-Luftabzweigungen darstellen, wobei die Umgebungskovariablen Vorhersagedaten des Sturms gemäß einer Vernetzung des Gebiets und Daten umfassen, die der Anordnung der HV-Luftleitungen und der HV-Luftabzweigungen eigen sind;

- wenigstens einen Schritt der Berechnung einer durchschnittlichen Anzahl von Unterbrechungen zwischen dem Beginn des Sturms und dem Zeitpunkt $t$ $E[N_c^t]$ (110) in dem Gebiet oder einem Teil des Gebiets, der einen Schritt der Auswahl einer Anzahl von Abzweigungen $N_d$ des betrachteten geografischen Gebiets gemäß der Formel umfasst:

[Math. 24]

$$ E[N_c^t \quad] = \sum_{d=1}^{N_d} p_d^t = \sum_{d=1}^{N_d} \left( 1 - e^{-\lambda_0(r_d^t)e^{\sum_{i=1}^{n} \beta_i x_i^d}} \right) $$

- wobei $N_c^t$ die Zufallsvariable ist, die die Anzahl der Unterbrechungen zwischen dem Beginn des drohenden Sturms und dem Zeitpunkt t der HV-Luftabzweigungen darstellt;
- wenigstens eine Anzeige und/oder Speicherung (120) der Daten der durchschnittlichen Anzahl von Unterbrechungen $E[N_c^t]$ in Abhängigkeit von den potenziell betroffenen Abzweigungen und der Wahrscheinlichkeit $p_d^t$ einer Unterbrechung für jede Abzweigung;
- und **dadurch gekennzeichnet, dass** die Berechnung der Wahrscheinlichkeit $p_d^t$ für jeden Wert von t zwischen 0 und dem Zeitpunkt des Endes des Sturms (190) wiederholt wird, um die Entwicklung von $E[N_c^t]$ in Echtzeit während des Sturms zu bewerten, damit sie gespeichert und/oder angezeigt werden kann.

2. Verfahren nach Anspruch 1, umfassend:

- wenigstens eine Berechnung eines Konfidenzintervalls ic (130) der Anzahl der unterbrochenen Abzweigungen in dem Gebiet oder einem Teil des Gebiets zwischen dem Beginn des drohenden Sturms und dem Zeitpunkt t mittels einer Annäherung der Gesetzmäßigkeit von $N_c^t$ durch eine Poisson-Verteilung mit dem Parameter:

[Math. 25]

$$ \sum_{d=1}^{N_d} p_d^t $$

- wenigstens eine Berechnung der Quantile dieser Gesetzmäßigkeit, um das Konfidenzintervall ic zu erhalten,
- wenigstens eine Speicherung des Konfidenzintervalls und/oder Anzeige des Konfidenzintervalls (140),
wobei die Berechnung des Konfidenzintervalls ic für jeden Wert t zwischen 0 und dem Zeitpunkt des Endes des Sturms (190) wiederholt wird, um die Entwicklung des Konfidenzintervalls während des Sturms zu bewerten, anzuzeigen und/oder zu speichern.

3. Verfahren nach Anspruch 1 oder 2, das ausgehend von der Unterbrechungswahrscheinlichkeit $p_d^t$ umfasst,

- einen oder mehrere Schritte der Berechnung der Anzahl von Ereignissen auf der mit einer HV-Luftabzweigung verbundenen HV-Luftleitung (150) zwischen dem Beginn des Sturms und dem Zeitpunkt t für jede HV-Luftabzweigung d mittels einer Poisson-Verteilung mit dem Parameter:

[Math. 26]

$$\lambda_d^t = -\log(1 - p_d^t) = \lambda_0(r_t)e^{\sum_{i=1}^{n}\beta_i x_i^d}$$

- einen oder mehrere Schritte des Berechnens des Gesetzes der Anzahl von HV-Luftereignissen $N_i^t$ (160) in dem Gebiet, das die $N_d$ HV-Luftabzweigungen zwischen 0 und dem Zeitpunkt t aufweist, mittels einer Poisson-Verteilung mit dem Parameter:

[Math. 27].

$$\sum_{d=1}^{N_d} \lambda_d^t$$

- einen oder mehrere Schritte des Speicherns und/oder Anzeigens (170) des Mittelwerts $E[N_{inc}]$ der geschätzten Anzahl von Ereignissen zur Verwendung als Werkzeug zur Vorbereitung von Einsatzmitteln.

**4.** Verfahren nach einem der vorhergehenden Ansprüche, wobei für jede HV-Luftabzweigung die standortspezifischen Kovariablen wenigstens die folgenden Daten umfassen:

- ein Gebiet, in dem sich die HV-Luftabzweigung befindet;
- die Art der Bewaldung, die in wenigstens einem Teil dieses Gebiets vorliegt;
- die Länge der HV-Luftleitung, die mit der Abzweigung verbunden ist;
- die Länge der HV-Luftleitung, die dem Risiko einer Bewaldung ausgesetzt ist.

**5.** Verfahren nach einem der vorhergehenden Ansprüche, bei dem für jede HV-Abzweigung die Wetter-Kovariablen wenigstens die folgenden Daten umfassen:

- die Jahreszeit des Auftretens des Sturms;
- die durchschnittliche Temperatur während des Sturms, die aus der Sturmvorhersage stammt;
- die durchschnittliche Luftfeuchtigkeit während des Sturms, die aus der Sturmvorhersage stammt;
- die Windrichtung während des Sturms (Nord, Süd, Ost oder West).

**6.** Verfahren nach Anspruch 5, wobei die Windrichtung in den Vorhersagedaten enthalten ist und die Windrichtung berechnet wird, indem der Mittelwert der Windrichtungen genommen wird, wenn die Böen das 75%-Quantil der vorhergesagten Böen während des Tages, an dem der Sturm vorhergesagt wird, überschreiten.

**7.** Verfahren nach einem der vorhergehenden Ansprüche, wobei die Berechnungen bei jeder Änderung der Vorhersagedaten für Stürme in dem Gebiet erneut durchgeführt werden (190).

**8.** Verfahren nach einem der vorhergehenden Ansprüche, das gemäß einer Methode zur Aggregation von Modellen (300a) für jede HV-Luftabzweigung eines betrachteten Gebiets einen Schritt (310) der Berechnung der Zugehörigkeit zu einer der beiden Klassen "unterbrochen", "nicht unterbrochen", einen Schritt (320) der Reihenfolge der Abzweigungen und der Zuordnung zur Klasse "unterbrochen" zu den $E[N_c]$ Abzweigungen mit dem höchsten Rang gemäß der Reihenfolge und einen Schritt (330) zur Anzeige und/oder Speicherung der Abzweigungen, die zur Klasse "unterbrochen" gehören, umfasst.

**9.** Verfahren nach einem der Ansprüche 1 bis 7, wobei die HV-Luftabzweigungen nach Quellstationen gruppiert sind, wobei das Verfahren nach einer Methode zur Aggregation von Modellen (300b) umfasst:

- wenigstens einen Schritt (340) der Berechnung der durchschnittlichen Anzahl von Quellstationen mit wenigstens einer unterbrochenen HV-Luftabzweigung in einer Population von $N_c^p$ Quellstationen in wenigstens einem Teil des Gebiets, wobei:

[Math. 28]

$$E\left[N_c^p\right] = \sum_{j=1}^{N_P}\left(1 - \prod_{i=1}^{N_d^j}(1 - p_{d_i})\right)N_d^j$$

die Anzahl der HV-Luftabzweigungen für die Quellstation j ist, und, $p_{di}$ die Wahrscheinlichkeit der Unterbrechung der HV-Luftabzweigung $d_i$ während des Sturms ist, die durch das Cox-Modell berechnet wurde, und,
- wenigstens einen Schritt (350) der Berechnung der Zugehörigkeit der Quellstationen zu einer der beiden Klassen "wenigstens eine unterbrochene HV-Luftabzweigung" und "keine unterbrochene HV-Luftabzweigung", die eine Reihenfolge der Quellstationen erzeugen, wobei die Zugehörigkeit zu der Klasse "wenigstens eine unterbrochene HV-Luftabzweigung" den $E[N_c^p]$ Quellstationen mit dem höchsten Rang gemäß der Reihenfolge zugewiesen wird, und
- wenigstens einen Schritt des Anzeigens und/oder Speicherns (360) der Quellstationen, die zur Klasse "wenigstens eine unterbrochene HV-Luftabzweigung" gehören.

10. Verfahren nach Anspruch 9, wobei die Ergebnisse auf ein Netz von Quellstationen zurückgeführt werden, zu denen die HV-Luftabzweigungen gehören, wobei der Algorithmus eine Lokalisierung der Quellstationen umfasst, bei denen wenigstens eine HV-Luftabzweigung als unterbrochen eingestuft ist, und eine Anzeige einer Vorhersage der Quellstationen mit als unterbrochen eingestuften HV-Luftabzweigungen umfasst.

11. Verfahren nach Anspruch 8, 9 oder 10, wobei die Methode zur Aggregation von Modellen einen Algorithmus verwendet, der in der Programmiersprache R als XGBoost bekannt ist.

12. Verfahren nach einem der Ansprüche 8 bis 11, wobei die Methode als Variablen die Stundenzahl(en) berücksichtigt, für die HV-Luftabzweigungen von einer oder mehreren Böen betroffen sind, die über einer oder mehreren gegebenen Geschwindigkeiten liegen.

13. Verfahren nach einem der Ansprüche 8 bis 12, wobei die Methode als Variablen wenigstens einen der folgenden Parameter berücksichtigt:

    - Anzahl der vergangenen windbedingten Unterbrechungen;
    - Längen- und Breitengrad der HV-Luftabzweigung als Ersatz für die Region, in der sich die HV-Luftabzweigung befindet;
    - Höhe;
    - Wert der Windrichtung in Grad.

14. Verfahren nach einem der vorhergehenden Ansprüche, welches Folgendes umfasst:

    - einen oder mehrere vorhergehende Schritte des Sammelns von Umgebungsdaten (400) der elektrischen HV-Luftleitungen, die mit den HV-Luftabzweigungen in dem Gebiet verbunden sind, und zum Organisieren einer Datenbank, die die Umgebungsdaten der HV-Luftabzweigungen in Form von Kovariablen $X^d = (X_1^d, \ldots, X_n^d)$ gemäß einer Vernetzung des Gebiets verknüpft, und,
    - einen oder mehrere Lernschritte (420), ausgehend von einer Datenbank (410), die Wettervorhersagedaten einer Vielzahl von vergangenen Stürmen und die zugehörigen Netzausfälle zusammenfasst, zur Berechnung von Parametern βi eines Cox-Modells, dessen Ausfallrate wie folgt ausgedrückt wird

[Math. 29]

$$\lambda(r_d, X_1, \dots, X_n) = \lambda_0(r_d)e^{\sum_{i=1}^{n} \beta_i X_i^d}$$

wobei die Koeffizienten β den Einfluss der Kovariablen auf das Ausfallrisiko darstellen, wobei das COX-Modell als ein Spannungs-Widerstands-Modell betrachtet wird, bei dem die Spannung $r_d$ die maximale Böe ist, die eine Abzweigung vor einer Unterbrechung oder während der vergangenen Stürme erfährt, wenn die Abzweigung nicht unterbrochen ist, und bei dem $\lambda_0(r_d)$ die Ausfallrate ist, wenn alle Kovariablen null sind.

**Claims**

1. A method for determining the risk of outages on an electrical network infrastructure of a territory comprising a number $N_{dep}$ of overhead high voltage feeders called overhead HV feeders d in the case of a storm, **characterised in that** it comprises for a coming storm:

   - for each overhead HV feeders from said territory, at least one calculation of probability $P_d^t \, (100)$ that said feeder is cut off according to the equation drawn from a Cox model including as constraint the maximum gust value $r_t$ to be undergone by said feeder between the beginning of the coming storm and a time t:

   [Math. 23]

   $$p_d^t = 1 - e^{-\lambda_0(r_d^t)e^{\sum_{i=1}^{n} \beta_i X_i^d}}$$

   - with $X^d = (X_1^d, \dots, X_n^d)$ environmental covariates of said overhead HV feeders and βi the parameters representing the impact of said covariates on the risk of failure of said overhead HV feeders, said environmental covariates including forecast data of said storm according to a meshing of said territory and data specific to the installation of said overhead HV lines and said overhead HV feeders;
   - at least one step of calculating an average number of outages between the start of the storm and time t $E[N_{cut}^t] \, (110)$ on the territory or a portion of the territory including a step of selecting a number of feeders $N_d$ from the considered geographical area according to the formula:

   [Math. 24]

   $$E[N_{cut}^t] = \sum_{d=1}^{N_{dep}} p_d^t = \sum_{d=1}^{N_{dep}} \left( 1 - e^{-\lambda_0(r_d^t)e^{\sum_{i=1}^{n} \beta_i X_i^d}} \right)$$

   - For which $N_{cut}^t$ is the random variable representing the number of outages between the start of the coming storm and the time t of said overhead HV feeders;
   - at least one display and/or a backup (120) of the data of the average number of outages $E[N_{cut}^t]$ depending on potentially impacted feeders and the outage probability $p_d^t$ for each feeder;

   and **characterised in that** the calculation of probability $p_d^t$ is reiterated for each value of t comprised between 0 and the time of end of the storm (190) in order to evaluate the evolution of $E[N_{cut}^t]$ in real time during the storm so that it can be memorised and/or displayed.

2. The method according to claim 1, including:

- at least one calculation of a confidence interval ic (130) of the number of feeders cut off in the territory or a portion of the territory between the start of the coming storm and the time t by means of an approximation of the law of $N_{cut}^t$ by a Poisson distribution of parameter:

[Math. 25]

$$\sum_{d=1}^{N_{dep}} p_d^t$$

- at least one, calculation of the quantiles of this law to obtain said confidence interval *ic,*
- at least one storage of said confidence interval and/or the display of said confidence interval (140)

said calculation of said confidence interval *ic* being reiterated for each value of t comprised between 0 and the time of end of the storm (190) in order to evaluate the evolution of said confidence interval during the storm, display it and/or store it.

3. The method according to claim 1 or 2, including, from the outage probability $p_d^t$,

- one or more steps of calculating the number of incidents on the overhead HV line (150) associated with an overhead HV feeder between the start of the storm and the time t for each overhead HV feeder dby means of a Poisson distribution of parameter:

[Math. 26]

$$\lambda_d^t = -\log(1 - p_d^t) = \lambda_0(r_t)e^{\sum_{i=1}^n \beta_i X_i^d}$$

- one or more steps of calculating the law of the number of overhead HV incidents $N_{inc}^t\ (160)$ on said territory containing the $N_d$ overhead HV feeders between 0 and the time t by means of a Poisson distribution of parameter:

[Math. 27]

$$\sum_{d=1}^{N_{dep}} \lambda_d^t$$

- one or more steps of saving and/or displaying (170) the average E[$N_{inc}$] of said numbers of incursions estimated for a use as a tool for preparing intervention means.

4. The method according to any one of the preceding claims, for which, for each overhead HV feeder, the covariates specific to the installation include at least the following data:

- an area where the overhead HV feeder is located;
- the type of afforestation observed on at least one portion of said area;
- the length of the overhead HV line connected to the feeder;
- the length of the overhead HV line subject to a risk of afforestation.

5. The method according to any one of the preceding claims, for which, for each overhead HV feeder, the weather covariates include at least the following data:

- the season of occurrence of the storm;

- the average temperature during the storm from storm forecasts;
- the average humidity during the storm from storm forecasts;
- the direction of the wind during the storm (North, South, East or West).

6. The method according to claim 5, for which, the forecast data including the wind direction, the latter is calculated by taking the average of the wind directions when the gusts exceed the 75% quantile of the forecast gusts during the day during which the storm is forecast.

7. The method according to any one of the preceding claims, for which the calculations are reiterated (190) each time the forecast storm data in said territory is modified.

8. The method according to any one of the preceding claims, including, according to a model aggregation method (300a), for each overhead HV feeder from a considered area, a step (310) of calculating membership in one of the two classes "cut off", "uncut", a step (320) of scheduling feeders and assigning the "cut" class to the $E[N_{cut}]$ highest rank feeders according to said scheduling and a step (330) of displaying and/or storing said feeders belonging to the "cut" class.

9. The method according to any one of claims 1 to 7, for which, the overhead HV feeders being grouped according to source stations, the method includes according to a model aggregation method (300b):

   - at least one step (340) of calculating the average number of source stations with at least one overhead HV feeder cut off on a population of $N_{coup}^{PS}$ source stations in at least portion of the territory:

   [Math. 28]

   $$E[N_{cut}^{PS}] = \sum_{j=1}^{N_{PS}} \left( 1 - \prod_{i=1}^{N_{dep}^{j}} \left( 1 - p_{d_i} \right) \right) N_{dep}^{j}$$

   being the number of overhead HV feeders for the source station j, and, $p_{d_i}$ being the outage probability of the overhead HV feeder d, during the storm calculated by the Cox model, and,
   - at least one step (350) of calculating the belonging of the source stations to one of the two classes "at least one cut off overhead HT feeder" and "no cut off overhead HT feeder" producing a scheduling of the source stations, the belonging to the class "at least one cut off overhead HT feeder" being assigned to the $E[N_{cut}^{PS}]$ source stations of the highest rank according to said scheduling and;
   - at least one step of displaying and/or storing (360) said source stations belonging to the class "at least one cut off overhead HT feeder".

10. The method according to claim 9 for which the results are returned to a mesh of source stations to which the overhead HV feeders belong, the algorithm including a location of the source stations of which at least one overhead HV feeder is classified cut off and a display of a forecast of source stations with overhead HV feeders classified cut off.

11. The method according to claim 8, 9 or 10, for which said model aggregation method uses an algorithm known as XGBoost in the R language.

12. The method according to any one of claims 8 to 11, for which the method takes into account as variables the number(s) of hours for which the overhead HV feeders are affected by one or more gusts which are greater than one or several given speeds.

13. The method according to any one of claims 8 to 12, for which the method takes into account as variables at least one of the data:

   - number of past wind-related outages;
   - longitude and latitude of the overhead HV feeder replacing the region where the overhead HV feeder is located;

- altitude;
- value in degrees of the wind direction.

14. The method according to any one of the preceding claims including:

    - one or more preliminary steps of collecting environment data (400) of overhead high voltage electrical lines connected to said overhead HV feeders in said territory and the organisation of a database associating said environmental data from said overhead HV feeders in the form of covariates $X^d = (X_1^d, ..., X_n^d)$ according to a meshing of said territory and,
    - one or more learning steps (420), from a database (410) grouping together weather forecast data from a plurality of past storms and the associated network outages, for calculating parameters $\beta i$ of a Cox model whose failure rate is expressed as follows

[Math. 29]

$$\lambda(r_d, X_1, ..., X_n) = \lambda_0(r_d)e^{\sum_{i=1}^{n} \beta_i X_i^d}$$

the coefficients $\beta$ representing the impact of said covariates on the risk of failure by considering said COX model as a constraint /resistance model whose constraint $r_d$ is the maximum gust undergone by a feeder before an outage or during said past storms if the feeder is not cut off and for which $\lambda_0(r_d)$ is the failure rate when all covariates are zero.

**FIG. 1**

FIG. 2

FIG. 3

**FIG. 4**

300a

Méthode agrégation

310

pour chaque départ HTA
calcul score
appartenance à classes
« *coupé* », « *non coupé* »

320

ordonnancement et
affectation classe « coupé » aux $E[N_{coup}]$ départs
de rang le plus élevé

330

affichage et/ou mémorisation
$E[N_{coup}]$ départs
de rang le plus élevé

## FIG. 5A

300b

Méthode agrégation

340

calcul nombre moyen postes sources avec au moins un départ HTA coupé

$$E[N_{coup}^{PS}] = \sum_{j=1}^{N_{PS}} \left( 1 - \prod_{i=1}^{N_{dep}^{j}} (1 - p_{d_i}) \right)$$

350

ordonnancement et
affectation classe « au moins un départ HTA coupé »
aux $E[N_{coup}^{PS}]$ postes source de rang le plus élevé

360

affichage et/ou mémorisation
postes sources classe
« au moins un départ HTA coupé ».

**FIG. 5B**

**400**

Collecte données

**420**

**410**

Tempêtes
et données
environnement

Apprentissage

$$\lambda(r_d, X_1^d, \ldots, X_n^d) = \lambda_0(r_d)e^{\sum_{i=1}^{n} \beta_i X_i^d}$$

Apprentissage
agrégation de modèles

**430**

**FIG. 6**

## RÉFÉRENCES CITÉES DANS LA DESCRIPTION

**Littérature non-brevet citée dans la description**

- **TERVO, ROOPE ; KARJALAINEN, JOONAS ; JUNG, ALEXANDER.** Short-Term Prédiction of Electricity Outages Caused by Convective Storms. *IEEE Transactions on Geoscience and Remote Sensing.,* 2019, 1-9
- **D. CERRAI et al.** Predicting Storm Outages Through New Représentations of Weather and Végétation. *IEEE Access,* 2019, vol. 7, 29639-29654
- **ROSHANAK NATEGHI ; SETH D. GUILKEMA ; STEVEN M. QUIRING.** Comparison and Validation of Statistical Méthodes for Predicting Power Outage Durations in the Event of Hurricanes. *Risk Analysis,* 2011, vol. 31 (12
- XGBoost: A Scalable Tree Boosting System. **CHEN T. ; GUESTRIN C.** Proceedings of the 22nd ACM SIGKDD International Conférence on Knowledge Discovery and Data Mining (KDD '16). Association for Computing Machinery, 2016, 785-794
- **LE CAM L.** An Approximation Theorem for the Poisson Binomial Distribution. *Pacific Journal of Mathematics,* 1960, vol. 10 (4), 1181-1197